(19) Europäisches Patentamt
European Patent Office
Office européen des brevets

(11) Publication number: **0 018 102 A1**

(12) **EUROPEAN PATENT APPLICATION**

(21) Application number: **80300927.3**

(22) Date of filing: **25.03.80**

(51) Int. Cl.³: **B 01 J 20/32**, C 22 B 3/00, C 07 F 7/10, C 07 F 7/18

(30) Priority: **27.03.79 GB 7910603**

(43) Date of publication of application: **29.10.80 Bulletin 80/22**

(84) Designated Contracting States: **BE DE FR GB IT NL**

(71) Applicant: **The British Petroleum Company Limited, Britannic House Moor Lane, London EC2Y 9BU (GB)**

(72) Inventor: **Hancock, Ronald David, The British Petroleum Company Ltd. Chertsey Road, Sunbury On-Thames Middlesex, TW16 7NL (GB)**
Inventor: **Kirk, Jennie Marie, 36 Anderson Drive, Ashford Middlesex, TW15 1B (GB)**

(74) Representative: **Harry, John et al, BP TRADING LIMITED Patents & Licensing Division Chertsey Road, Sunbury-on-Thames Middlesex TW16 7LN (GB)**

(54) **Functionalised inorganic oxide products and their use in the removal of heavy metals, transition metals and actinide metals from solution.**

(57) The invention relates to functionalised inorganic oxide products and their use in the removal of heavy metals, transition metals and activide metals from solution. The product is obtained by reacting an inorganic solid containing surface hydroxyl groups such as silica with a compound of formula:

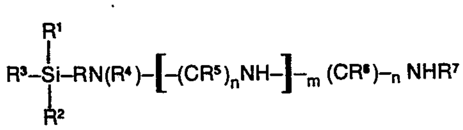

wherein R is a divalent organic group containing up to 20 carbon atoms; $R^1$, $R^2$ and $R^3$ are independently $-OR^8$ groups wherein $R^8$ represents a hydrogen atom or an alkyl, aryl or acyl group containing up to 20 carbon atoms; $R^4$, $R^5$, $R^6$ and $R^7$ represent independently hydrogen atoms, alkyl or aryl groups containing up to 20 carbon atoms and n and m are integers in the range 1 to 5. The product is particularly suitable for removing rhodium from solutions obtained from rhodium catalysed reactions in which a carboxylic acid, an anhydride, an ester, an alcohol or an ether is produced.

EP 0 018 102 A1

0018102



# FUNCTIONALISED INORGANIC OXIDE PRODUCTS AND THEIR USE IN THE REMOVAL OF HEAVY METALS, TRANSITION METALS AND ACTINIDE METALS FROM SOLUTION.

The present invention relates to functionalised inorganic oxide products and to their use in the removal of heavy metals, transition metals and actinide metals from solution and in particular to the removal of rhodium from a solution containing one or more of acetic acid, methanol, acetic anhydride, methyl acetate, dimethyl ether and water and a rhodium complex formed on mixing a rhodium component and a halogen-containing component in the presence of carbon monoxide.

The removal of metals from solution has in recent times assumed increasing importance not only from the view point of environmental protection but also that of process economics. Thus in the manufacture of chlorine and caustic soda by the electrolysis of brine in mercury cathode electrolytic cells the depleted brine leaving the cells contains a small concentration of mercury, usually between 2 and 10 mg/1, either in the form of elemental mercury or mercury compounds. Discharge of this depleted brine to a water course would both pollute the water and result in a loss of mercury which is significant in terms of process economics. As a result of the growing demand for uranium as a nuclear fuel, the recovery of uranium from solutions produced in the hydrometallurgical processing of uranium bearing materials is also of major importance. In the photographic industry it is desirable on economic grounds to recover silver from residues. Furthermore in the chemical industry many catalytic processes involve liquid phase reactions employing soluble Group VIII metal catalysts. Thus aldehydes and alcohols are produced by the hydroformylation of olefins in the presence of

rhodium and cobalt catalysts and acetic acid is produced by reacting methanol with carbon monoxide in the presence of a rhodium catalyst and a suitable promoter compound. A desirable objective is to recover from the reaction products the metal component of the catalyst in a form which facilitates reprocessing to the catalytic species. Our British Patent Specification No. 1530039 describes and claims a product suitable for the removal of heavy metals, transition metals and actinide metals from solution, obtained by reacting an inorganic solid containing surface hydroxyl groups in a first stage with a compound of formula (I)

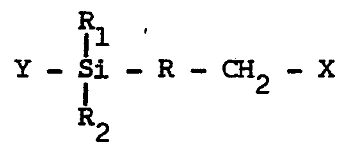 (I)

wherein R is a divalent organic group containing up to 20 carbon atoms, $R_1$ and $R_2$ are halogen atoms or organic radicals containing up to 20 carbon atoms, Y is a halogen atom or an $-OR^3$ group in which $R^3$ represents an H atom or an alkyl, aryl or acyl group containing up to 20 carbon atoms, and X is a halogen atom; and reacting the product of the first stage at elevated temperature with a polyamine of general formula (II)

$$NR^4[(CR^5{}_2)_nNH]_m(CR^6{}_2)_nNHR^7 \qquad (II)$$

wherein $R^4$, $R^5$, $R^6$ and $R^7$ represent H atoms, alkyl or aryl groups containing up to 20 carbon atoms and may be the same or different, n is an integer between 1 and 5, and m is an integer between 1 and 5, or a polyamine of formula (III)

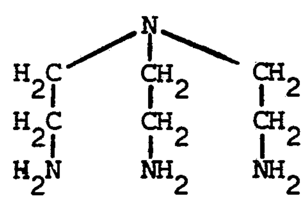 (III)

In another aspect of the invention there is provided a process for the removal of heavy metals, transition metals and actinide metals from solution which process comprises contacting the solution with the second stage reaction product as hereinbefore described and recovering an effluent of reduced metal content.

We have now found that a product similar to the product obtained in two stages as described in the complete specification of British Patent No. 1530039 can be obtained in a single stage and that the product so-obtained will remove heavy metals, transition metals and actinide metals from solutions containing them. In particular the product will remove rhodium from a solution containing rhodium and a halogen-containing component and one or more of acetic acid, methanol, acetic anhydride, methyl acetate, dimethyl ether and water.

Thus according to one aspect of the present invention there is provided a product, suitable for the removal of heavy metals, transition metals and actinide metals from solution, which product is obtained by reacting an inorganic solid containing surface hydroxyl groups with a compound of formula:

$$R^3-\overset{\displaystyle R^1}{\underset{\displaystyle R^2}{Si}}-R\,N(R^4)\left[(CR^5)_n NH\right]_m (CR^6)_n NHR^7 \qquad (IV)$$

wherein the formula (IV) R is a divalent organic group containing up to 20 carbon atoms; $R^1$, $R^2$ and $R^3$ are independently $-OR^8$ groups wherein $R^8$ represents a hydrogen atom or an alkyl, aryl or acyl group containing up to 20 carbon atoms; $R^4$, $R^5$, $R^6$ and $R^7$ represent independently hydrogen atoms, alkyl or aryl groups containing up to 20 carbon atoms and n and m are integers in the range 1 to 5.

The inorganic solid containing surface hydroxyl groups may be alumina, titania, zirconia, glass, sepiolite or a zeolitic molecular sieve. Preferably the inorganic solid is silica and more preferably it is silica gel. Furthermore mixtures of inorganic solids may suitably be employed. Unless they have been subjected to severe treatments, e.g. heating above 1000°C, all commercial silicas contain surface hydroxyl groups. However for applications in which the product is to be contacted with alkaline media, in which silica would be attacked, it is preferred to employ an alkali resistant inorganic solid.

In the formula (IV) $R^1$, $R^2$ and $R^3$ are preferably identical

alkoxy or aryloxy groups, even more preferably identical alkoxy groups. R is suitable an alkylene group containing up to 6 carbon atoms and is preferably a polymethylene group. The groups $R^4$, $R^5$, $R^6$ and $R^7$ are preferably hydrogen atoms, n is preferably 2 and m is preferably 1, 2 or 3. Preferably the compound of formula (IV) is

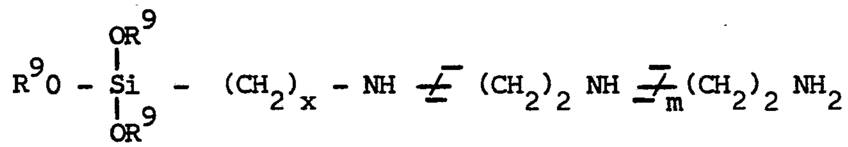 (V)

wherein $R^9$ is an alkyl or aryl group, x is an integer in the range 1 to 6, and m has a value 1, 2 or 3. A particularly preferred compound having the formula (V) is:

$$(CH_3O)_3Si(CH_2)_3NH(CH_2)_2NH(CH_2)_2NH_2.$$

Compounds having the formula (V) may be prepared by methods well-known in the art or may be obtained commercially. In the case of silica having surface hydroxyl groups and the compound having the formula (V) the product is believed to be formed by the simplified reaction represented by the following equation:

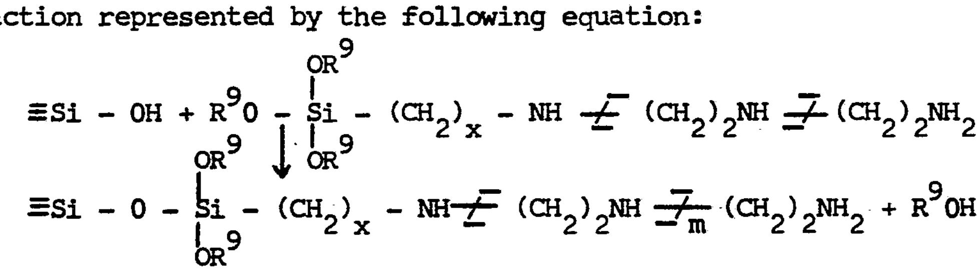

However the invention is not intended to be restricted in any way by the above equation representing the formation of the product.

Although ambient temperatures may be employed the reaction between the inorganic oxide and the compound of formula (IV) is preferably effected by heating the reactants together, e.g. under reflux, in the presence of an inert solvent for the compound of formula (IV) for a period sufficient for formation of the product, e.g. from 1 to 10 hours. Suitable inert solvents for the compound of formula (IV) include paraffinic and aromatic hydrocarbons. A particularly suitable solvent is toluene.

According to another aspect of the present invention there

is provided a process for the removal of a heavy metal, a transition metal or an actinide metal from a solution containing the metal in the form of a soluble compound thereof, which process comprises contacting the solution with the product as hereinbefore described.

Within the context of the present application the term heavy metal means a metal in a B sub-group of Groups I to VI of the Periodic Table as published in Advanced Inorganic Chemistry by Cotton and Wilkinson, published by Interscience, 1st and 2nd editions. Copper, mercury, silver and lead are typical heavy metals. The transition metal is defined as a metal having an incomplete d-shell of electrons in its electronic configuration. The term transition metal may be further sub-divided into non-noble transition metals, e.g. manganese, iron, nickel and cobalt, and noble transition metals, which are transition metals generally considered to be highly resistant to oxidation, e.g. ruthenium, rhodium, palladium, platinum, osmium and iridium. The term actinide metal is defined as a metal with an atomic number equal to or greater than 89 and includes uranium, thorium and plutonium.

The product may be used for removing metals from both aqueous and organic solutions.

Although the process is directly applicable to the removal of metals present in solution as soluble compounds thereof it may be extended to the removal of metals present as insoluble compounds or as elemental metal by a suitable pre-treatment to convert them to soluble compounds.

The solution containing the metal in the form of a soluble compound thereof may be contacted with the product at any temperature in the range 0 to 300°C. Atmospheric or superatmospheric pressure may be employed. The use of superatmospheric pressure is particularly suitable to prevent boiling at elevated temperature. The product is thought to remove the metals by complex compound formation through the nitrogen groups bonded to the silica surface.

The solution may be contacted with the product batchwise

or preferably continuously by passing the solution over a bed of the product housed in a suitable reactor.

The metals may be recovered, if desired, from the product by methods well known to those skilled in the art. One such method for removing the metal from the product is to elute the metal-loaded product with an aqueous solution of a mineral acid. Alternatively it may be preferable to elute certain metals with an organic eluting agent or, in the case of uranium for example basic solutions, e.g. ammoniacal ammonium carbonate.

The product is particularly suitable for removing rhodium from solution, especially from solutions obtained from rhodium catalysed reactions in which a carboxylic acid, an ester an alcohol an ether or an anhydride is produced. One such process in which a carboxylic acid is produced by the reaction of an alcohol with carbon monoxide in the presence of a catalyst system formed on mixing a rhodium component and a halogen-containing component is described, for example, in British Patent Specification No: 1 355 146 (Monsanto) and a process for regenerating a metal catalyst complex useful in such a process is described in British Patent Specification No: 1 425 872 (Monsanto). The regeneration process described involves precipitation of the rhodium complex from solution.

We have now found that the rhodium can be recovered by contacting a catalyst solution with the product of the present invention without the need to precipitate the rhodium complex.

Thus according to another aspect of the present invention there is provided a process for the recovery of rhodium from a solution comprising one or more of acetic acid, methanol, acetic anhydride, methyl acetate, dimethyl ether and water and a rhodium complex formed on mixing a rhodium component and a halogen-containing component in the presence of carbon monoxide which process comprises contacting the solution with the product as hereinbefore described and thereafter separating the product containing rhodium from the solution depleted in rhodium.

The rhodium component may be in the form of a salt, oxide, complex or co-ordination compound. Included among the large number of possible rhodium components are, for example, $RhCl_3.xH_2O$, $RhBr_3$, $RhI_3$, $Rh(NO_3)_3$.

$2H_2O$, $Rh_2O_3$, $Rh_2O_3.5H_2O$, $Rh_2(CO)_4Cl_2$, $Rh_2(CO)_4Br_2$, $Rh_2(CO)_4I_2$ and $Rh_4(CO)_{12}$, though this list is by no means considered to be a limiting one.

The halogen-containing component may be HI, iodine itself or any iodine-containing compound such as an alkyl iodide, for example methyl iodide and ethyl iodide, an aryl iodide such as phenyl iodide, or an iodine salt, for example sodium or potassium iodide, and ammonium iodide.

The rhodium may thereafter be recovered from the product, converted into the catalytic species or a species suitable for forming the active catalytic species under the carbonylation reaction conditions and recycled to the process.

The invention is illustrated by the following Examples. For the purpose of Example 2 a liquid feedstock similar to that described in British Patent Specification No. 1,425,872 was made up in the following manner:

Glacial acetic acid (150 ml), methanol (100 ml), water (30 ml), methyl iodide (15 ml) and rhodium tri-iodide (3 g) were placed in a 500 ml autoclave. After degassing the mixture with carbon monoxide, the autoclave was pressurised to 200 psig with carbon monoxide and heated to 175°C. The pressure was then increased to 500 psig with carbon monoxide and maintained at this temperature and pressure for 10 hours. After cooling to room temperature, the excess pressure was released and the products removed from the autoclave. The products were filtered to remove any insoluble material and then diluted with glacial acetic acid to give a solution containing approximately 10 parts per million of soluble rhodium.

Example 1

The Product

30-44 mesh Davison Grade 57 silica (40 g) was suspended in toluene (250 ml) and the silane $(MeO)_3Si(CH_2)_3NH(CH_2)_2NH(CH_2)_2NH_2$ (20 ml) added. The mixture was then stirred at reflux temperature for 4 hours. After cooling to room temperature, the silica product was isolated, Soxhlet extracted with methanol for 16 hours and finally dried in vacuo.

On analysis the silica product was found to contain 4.7 per cent weight nitrogen.

Example 2

Extraction of Rhodium from Solution

10 ml of the product, prepared as described in Example 1 was loaded into a vertical mounted glass column. The liquid feedstock, prepared as hereinbefore described, was pumped upwards through the column at a flowrate of 30 ml/h under ambient conditions for a period of 100 hours. Samples of the liquid leaving the top of the reactor were periodically taken and analysed for rhodium. Analysis of these samples showed that 95 per cent of the soluble rhodium had been extracted from the feedstock for the 100 hours duration of the test.

Example 3

Extraction of Copper from Aqueous Solution

100 ml of an aqueous solution containing 0.60 g of copper (II) chloride was shaken with 1.07g of the triamino-silica, prepared as described in Example 1, for 18 hours. The silica was then isolated by filtration, washed free from residual copper (II) chloride with water and finally dried in vacuo. On analysis the copper content of this product was found to be 2.7% wt.

Example 4

Extraction of Cobalt from Aqueous Solution

100 ml of an aqueous solution containing 0.49g of cobalt nitrate was shaken with 1.07g of the triamino-silica, prepared as described in Example 1, for 18 hours. The silica was then isolated by filtration, washed free from residual cobalt nitrate with water and finally dried in vacuo. On analysis the cobalt content of this product was found to be 2.8% wt.

Example 5

Extraction of Uranium from Aqueous Solution

100 ml of an aqueous solution containing 0.41g uranyl sulphate was shaken for 18 hours with 1.11g of the triamino-silica, (prepared as described in Example 1, and then soaked in 1N sulphuric acid for 10 minutes). The silica was then isolated by filtration, washed

free from residual uranyl sulphate with water and finally dried in vacuo. On analysis the uranium content of this product was found to be 13% wt.

Example 6

Extraction of Ruthenium from Organic Solution

50 ml of an ethanolic solution containing 0.15 g ruthenium trichloride was shaken with 1.09g of the triamino-silica, prepared as described in Example 1, for 18 hours. The silica was then isolated by filtration, washed free from residual ruthenium trichloride with ethanol and finally dried in vacuo. On analysis the ruthenium content of this product was found to be 5.8% wt.

Example 7

Extraction of Palladium from Organic Solution

50 ml of a solution containing 0.7g palladium acetate dissolved in glacial acetic acid was shaken with 1.08g of the triamino-silica, prepared as described in Example 1, for 18 hours. The silica was then isolated by filtration, washed free from residual palladium acetate with glacial acetic acid and water and finally dried in vacuum. On analysis the palladium content of this product was found to be 3.8% wt.

Example 8

Extraction of Silver from Aqueous Solution

100 ml of an aqueous solution containing 0.48 g of silver nitrate was shaken with 1.13g of the triamino-silica,prepared as described in Example 1, for 18 hours. The silica was then isolated by filtration, washed free from residual silver nitrate with water and finally dried in vacuo. On analysis the silver content of this product was found to be 8.2% wt.

Example 9

Extraction of Mercury from Aqueous Solution

100 ml of an aqueous solution of mercuric chloride containing 3750 ppb of mercury was shaken at room temperature with 1.01 g of the triamino-silica prepared as described in Example 1, for 30 minutes. A sample of the aqueous phase was withdrawn and on analysis was found to contain 62 ppb of mercury.

Claims:

1. A product, suitable for the removal of heavy metals, transition metals and actinide metals from solution, which product is obtained by reacting an inorganic solid containing surface hydroxyl groups with a compound of formula:

$$R^3 - \underset{R^2}{\overset{R^1}{\underset{|}{\overset{|}{Si}}}} - (R) - N(R^4) \left[ (CR^5)_n NH \right]_m (CR^6)_n NHR^7 \qquad (IV)$$

wherein in the formula (IV) R is a divalent organic group containing up to 20 carbon atoms; $R^1$, $R^2$ and $R^3$ are independently $-OR^8$ groups wherein $R^8$ represents a hydrogen atom or an alkyl, aryl or acyl group containing up to 20 carbon atoms; $R^4$, $R^5$, $R^6$ and $R^7$ represent independently hydrogen atoms, alkyl or aryl groups containing up to 20 carbon atoms and n and m are integers in the range 1 to 5.

2. A product according to claim 1 wherein the product is obtained by reacting silica with a compound of formula (IV).

3. A product according to either one of the preceding claims wherein the product is obtained by reacting an inorganic solid containing surface hydroxyl groups with a compound of formula:

$$R^9O - \underset{OR^9}{\overset{OR^9}{\underset{|}{\overset{|}{Si}}}} - (CH_2)_x - NH \left[ (CH_2)_2 \; NH \right]_m (CH_2)_2 \, NH_2 \qquad (V)$$

wherein $R^9$ is an alkyl or aryl group, x is an integer in the range 1 to 6 and m has the value 1, 2 or 3.

4. A product according to claim 3 wherein the compound of formula (V) is $(CH_2O)_3Si(CH_2)_3NH(CH_2)_2NH(CH_2)_2NH_2$.

5. A process for the removal of a heavy metal, a transition metal or an actinide metal from a solution containing the metal in the form of a soluble compound thereof, which process comprises contacting the solution with the product as claimed in any one of claims 1 to 4.

6. A process according to claim 5 wherein a heavy metal which is copper, silver, mercury or lead is removed from a solution containing the heavy metal.

7. A process according to claim 5 wherein a transition metal which is manganese, iron, nickel or cobalt is removed from a solution containing the transition metal.

8. A process according to claim 5 wherein a transition metal which is ruthenium, rhodium, palladium, platinum, osmium or iridium is removed from a solution containing the transition metal.

9. A process according to claim 5 wherein the solution is a rhodium-containing solution obtained from a rhodium - catalysed reaction in which a carboxylic acid, an ester, an alcohol, an ether or an anhydride is produced.

10. A process for the removery of rhodium from a solution comprising one or more of acetic acid, methanol, acetic anhydride, methyl acetate, dimethyl ether and water and a rhodium complex formed on mixing a rhodium component and a halogen-containing component in the presence of carbon monoxide which process comprises contacting the solution with the product as claimed in any one of claims 1 to 4 and thereafter separating the product containing rhodium from the solution depleted in rhodium.

11. A process according to claim 9 wherein the rhodium component is $RhCl_3.xH_2O$,$RhBr_3$,$RhI_3$,$Rh(NO_3)_3.2H_2O$,$Rh_2O_3.5H_2O$,$Rh_2(CO)_4Cl_2$,$Rh_2(CO)_4Br_2$,$Rh_2(CO_4)I_2$ or $Rh_4(CO)_{12}$.

12. A process according to either one of claims 10 or 11 wherein the halogen-containing component is an alkyl iodide, an aryl iodide or an iodine salt.

European Patent Office

# EUROPEAN SEARCH REPORT

0018102

Application number

EP 80 30 0927.3

## DOCUMENTS CONSIDERED TO BE RELEVANT

| Category | Citation of document with indication, where appropriate, of relevant passages | Relevant to claim |
|---|---|---|
| D,A | GB - A - 1 355 146 (MONSANTO CO.)<br>-- | |
| D,A | GB - A - 1 425 872 (MONSANTO CO.)<br>-- | |
| D,A | GB - A - 1 530 039 (BRITISH PETROLEUM CO.)<br>-- | |
| A | GB - A - 1 532 295 (BRITISH PETROLEUM CO.)<br>-- | |
| A | DE - A1 - 2 522 812 (BRITISH PETROLEUM CO.)<br>-- | |
| A,P | EP - A1 - 0 008 902 (BRITISH PETROLEUM CO.)<br>-- | |
| A | US - A - 3 664 967 (DOW CHEMICAL CO.)<br>-- | |
| A | FR - A - 2 230 405 (I. HALÁSZ)<br>-- | |
| A | FR - A1 - 2 275 252 (I. SEBESTIAN)<br>---- | |

X The present search report has been drawn up for all claims

| Place of search | Date of completion of the search | Examiner |
|---|---|---|
| Berlin | 29-07-1980 | SUTOR |

CLASSIFICATION OF THE APPLICATION (Int. Cl.[3])

B 01 J 20/32
C 22 B 3/00
C 07 F 7/10
C 07 F 7/18

TECHNICAL FIELDS SEARCHED (Int.Cl.[3])

B 01 J 20/32
C 07 F 7/10
C 07 F 7/18
C 22 B 3/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document